(19) Europäisches Patentamt
European Patent Office
Office européen des brevets

(11) **EP 4 290 429 A1**

(12) **EUROPEAN PATENT APPLICATION**
published in accordance with Art. 153(4) EPC

(43) Date of publication:
**13.12.2023 Bulletin 2023/50**

(21) Application number: **22749844.1**

(22) Date of filing: **07.02.2022**

(51) International Patent Classification (IPC):
**G06N 20/00** (2019.01)    **G06Q 10/06** (2023.01)
**G06Q 10/10** (2023.01)

(52) Cooperative Patent Classification (CPC):
**G06N 20/00; G06Q 10/06; G06Q 10/10**

(86) International application number:
**PCT/JP2022/004684**

(87) International publication number:
**WO 2022/168973 (11.08.2022 Gazette 2022/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.02.2021   JP 2021017261
07.01.2022   JP 2022001614**

(71) Applicant: **Daikin Industries, Ltd.**
**Osaka-Shi, Osaka 530-0001 (JP)**

(72) Inventors:
• **KAGAWA, Sanae**
**Osaka-shi, Osaka 530-0001 (JP)**
• **ITOH, Yuichi**
**Suita-Shi, Osaka 565-0871 (JP)**

(74) Representative: **Global IP Europe**
**Patentanwaltskanzlei**
**Pfarrstraße 14**
**80538 München (DE)**

(54) **LEARNING DEVICE AND EVALUATION INFORMATION OUTPUT DEVICE**

(57)    An evaluation information output apparatus (100) outputs, based on a nodding action of one or more persons, evaluation information on the nodding action and includes a first information acquisition unit (101) and an output unit (102). The first information acquisition unit (101) acquires information (11) about the nodding action. The output unit (102) includes a learned model (40) that receives the information about the nodding action as input and outputs the evaluation information on the nodding action and uses the learned model (40) to estimate and output the evaluation information (21) on the nodding action from the information (11) about the nodding action. The learned model (40) is obtained by learning the information about the nodding action and the evaluation information on the nodding action as a learning data set.

FIG. 2

**Description**

Technical Field

The present disclosure relates to a learning apparatus and an evaluation information output apparatus.

Background Art

Conventionally, the productivity of meetings is estimated using the behavior, the amount of utterance, and the like, of participants in the meeting obtained using images (PTL 1 (Japanese Unexamined Patent Publication No. 2019-211962).

Summary of Invention

Technical Problem

To estimate the productivity of a group activity such as a meeting, the evaluation based on the behavior and the utterance amount of the participants in the meeting results in a quantitative evaluation of the group activity but not a sufficient qualitative evaluation. Furthermore, there is a case where a high-quality group activity is performed even though the quantitative evaluation of the group activity is low, and thus the qualitative evaluation is important; however, there is an issue that it is difficult to perform the qualitative evaluation of a group activity such as a meeting.

Solution to Problem

A learning apparatus according to a first aspect is a learning apparatus that learns a nodding action of one or more persons and includes a learning unit. The learning unit generates a learned model that receives information about the nodding action as input and outputs evaluation information on the nodding action. The learning unit learns the information about the nodding action and the evaluation information on the nodding action as a learning data set to generate the learned model.

The learning apparatus learns the information about the nodding action, which is a reaction of the participant in the meeting, or the like, and the evaluation information on the nodding action as the learning data set and thus may generate the learned model capable of qualitatively evaluating a group activity such as a meeting.

An evaluation information output apparatus according to a second aspect is an evaluation information output apparatus that, based on a nodding action of one or more persons, outputs evaluation information about the nodding action and includes a first information acquisition unit and an output unit. The first information acquisition unit acquires information about the nodding action. The output unit includes a learned model that receives information about the nodding action as input and outputs evaluation information on the nodding action. The output unit uses the learned model to estimate and output evaluation information on the nodding action from the information about the nodding action. The learned model is obtained by learning the information about the nodding action and the evaluation information on the nodding action as a learning data set.

In the evaluation information output apparatus, the learned model is used to estimate the evaluation information on the nodding action from the information about the nodding action, which is a reaction of the participant in the meeting, or the like, and thus it is possible to perform the qualitative evaluation of a group activity, such as a meeting.

An evaluation information output apparatus according to a third aspect is the apparatus according to the second aspect and further includes a second information acquisition unit. The second information acquisition unit acquires information about a target causing the nodding action. The target causing the nodding action includes at least one of an utterance during a meeting, data or an object presented during a presentation, and a performance of a person or an animal. The output unit outputs information about the target causing the nodding action and the evaluation information on the nodding action in association with each other.

The evaluation information output apparatus outputs the information about the target causing the nodding action and the evaluation information on the nodding action in association with each other, and thus the evaluation information on the nodding action caused by the specific target may be obtained.

An evaluation information output apparatus according to a fourth aspect is the apparatus according to the second aspect or the third aspect, and the evaluation information on the nodding action is information about emotions of the person. The information about the emotions of the person includes information about delight, anger, sorrow, and pleasure of the person or information as to whether the person is agreeable to the target causing the nodding action. The evaluation information on the nodding action is acquirable by analyzing image data on a face of the person or analyzing audio data.

In the evaluation information output apparatus, the intention of the nodding action of the person is estimated from the information on the nodding action so that the quality of nodding may be determined.

An evaluation information output apparatus according to a fifth aspect is the apparatus according to the second aspect or the third aspect, and the evaluation information on the nodding action is an evaluation of the target causing the nodding action. The evaluation of the target causing the nodding action is a result of a manual questionnaire conducted on the person.

In the evaluation information output apparatus, the evaluation of the target causing the nodding action is obtained by the questionnaire so that the quality of the nodding action may be determined.

An evaluation information output apparatus according to a sixth aspect is the apparatus according to any one of the second aspect to the fifth aspect, and the information about the nodding action includes at least one of a number, a period, and an amplitude of the nodding action.

The evaluation information output apparatus measures the number, the period, or the amplitude of the nodding action and thus may obtain the information about the reactions of the participants in the meeting, or the like.

An evaluation information output apparatus according to a seventh aspect is the apparatus according to any one of the second aspect to the fifth aspect, and the information about the nodding action includes at least one of a timing of the nodding action, a strength of the nodding action, presence or absence of, among a plurality of the persons, the persons having an identical timing of the nodding action, and a number of persons having an identical timing of the nodding action.

The evaluation information output apparatus measures the timing of the nodding action, the strength of the nodding action or, among a plurality of persons, the presence or absence of persons nodding at the same time or the number of persons nodding at the same time and thus may obtain the information about the reactions of the participants in the meeting, or the like.

An evaluation information output apparatus according to an eighth aspect is the apparatus according to the third aspect, and the information about the nodding action includes a time until the nodding action occurs after an utterance during the meeting.

The evaluation information output apparatus measures the time until the nodding action occurs after an utterance during the meeting and thus may determine the quality of the nodding action.

An evaluation information output apparatus according to a ninth aspect is the apparatus according to any one of the second aspect to the fifth aspect, and the information about the nodding action includes at least one of a frequency of the nodding action and repetition of the nodding action per unit time.

The evaluation information output apparatus acquires the frequency of the nodding action or the repetition of the nodding action per unit time and thus may determine the quality of the nodding action.

An evaluation information output apparatus according to a tenth aspect is the apparatus according to any one of the second aspect to the ninth aspect, and the first information acquisition unit uses a seat surface sensor, motion capture, an acceleration sensor, a depth camera, or a moving image of the person to recognize the nodding action and acquire the information about the obtained nodding action.

The evaluation information output apparatus uses a seat surface sensor, motion capture, an acceleration sensor, a depth camera, or a moving image of a person and thus may easily acquire the information about the nodding action, which is a gesture during the meeting.

Brief Description of Drawings

[Fig. 1] Fig. 1 is a functional block diagram of a learning apparatus 1.
[Fig. 2] Fig. 2 is a functional block diagram of an evaluation information output apparatus 100.
[Fig. 3] Fig. 3 is a table illustrating an example of learning data.
[Fig. 4] Fig. 4 is a graph illustrating a learning process.
[Fig. 5] Fig. 5 is a flowchart of the evaluation information output apparatus 100.
[Fig. 6] Fig. 6 is a functional block diagram of an evaluation information output apparatus 200.

Description of Embodiments

(1) Overall Configuration of Evaluation Information Output Apparatus

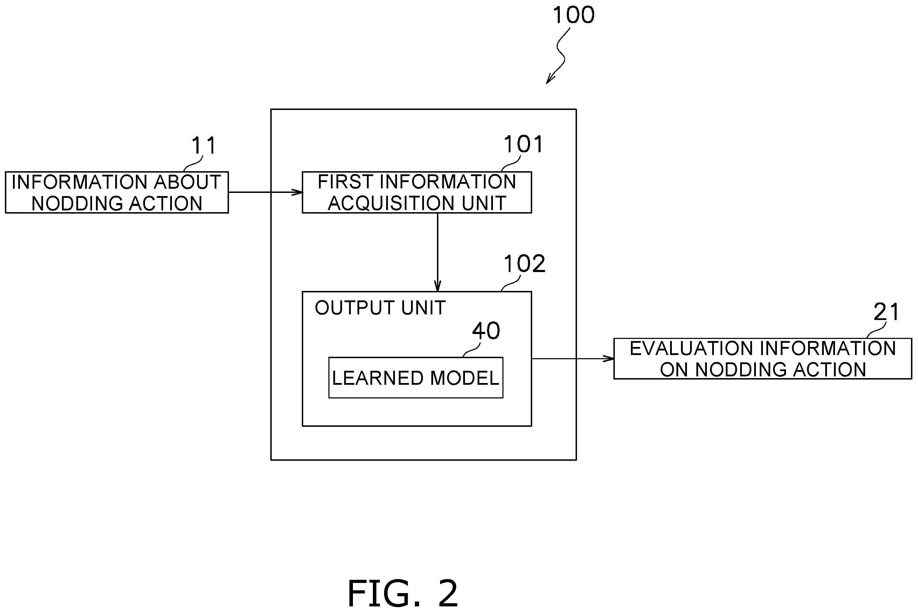

Fig. 2 illustrates an evaluation information output apparatus 100 according to the present embodiment. The evaluation information output apparatus 100 is implemented by a computer. The evaluation information output apparatus 100 includes a first information acquisition unit 101 and an output unit 102. The first information acquisition unit 101 acquires information 11 about a nodding action. The output unit 102 includes a learned model 40 and uses the learned model 40 to estimate and output evaluation information 21 on the nodding action from the information 11 about the nodding action.

(2) Detailed Configuration of Evaluation Information Output Apparatus

(2-1) First Information Acquisition Unit

The first information acquisition unit 101 acquires the information 11 about the nodding action. The information 11 on the nodding action is the number of nodding actions. According to the present embodiment, the first information acquisition unit 101 uses a seat surface sensor (not illustrated) to acquire the number of nodding actions.

A seat surface sensor (pressure sensor) is used to count the number of nodding actions. A participant of the meeting sits on a chair on which the seat surface sensor is installed.

First, the position of a center of gravity P and a total load WT are obtained based on the magnitude of the pressure applied to the seat surface sensors installed at four corners of the chair. The seat surface sensor learns changes in the magnitudes of the center of gravity P and the total load WT by machine learning to detect whether it corresponds to a nodding action. The seat surface sensor detects the timing of nodding of a person by changes in the center of gravity and the weight.

The seat surface sensor divides the time during the meeting into a plurality of frame units and calculates a nodding amount, which is the number of nodding actions. It is determined whether each participant in the meeting is nodding on a frame-by-frame basis. For a participant k, a nodding amount $a_{kt}$ at a certain time t is calculated by Equation 1 below, where $S_k$ is the total of frames in which the participant k is nodding.

Equation 1:

$$a_{kt} = \begin{cases} \dfrac{1}{S_k} \ (k \ is \ nodding \ at \ frame \ t.) \\ 0 \ (k \ is \ not \ nodding \ at \ frame \ t.) \end{cases}$$

For example, when there are six participants, the frames, which are assigned to the respective participants and correspond to all the six participants, are added up to calculate the amount of nodding in the frames. A nodding amount At at the certain time t is calculated by Equation 2 below.

Equation 2:

$$A_t = \sum_{k=1}^{6} a_{kt}$$

As indicated by Equation 1, each participant is weighted by the reciprocal of the total of frames in which the participant is nodding so that the effect of nodding of a frequently nodding person is small and the effect of nodding of an infrequently nodding person is large when the nodding amount is calculated by Equation 2.

(2-2) Output Unit

The output unit 102 includes the learned model 40 and uses the learned model 40 to estimate and output the evaluation information 21 on the nodding action from the information 11 about the nodding action. A processor such as a CPU or a GPU may be used as the output unit 102. The output unit 102 reads programs stored in a storage device (not illustrated) and performs predetermined image processing and arithmetic processing in accordance with the programs. Further, the output unit 102 may write an arithmetic result in the storage device and read information stored in the storage device in accordance with the program. The storage device may be used as a database.

(3) Learning Process

The learned model 40 used by the evaluation information output apparatus 100 will be described. The learned model 40 uses an estimation model that is previously learned by a learning apparatus 1 using a learning data set including the information about the nodding action and the evaluation information on the nodding action.

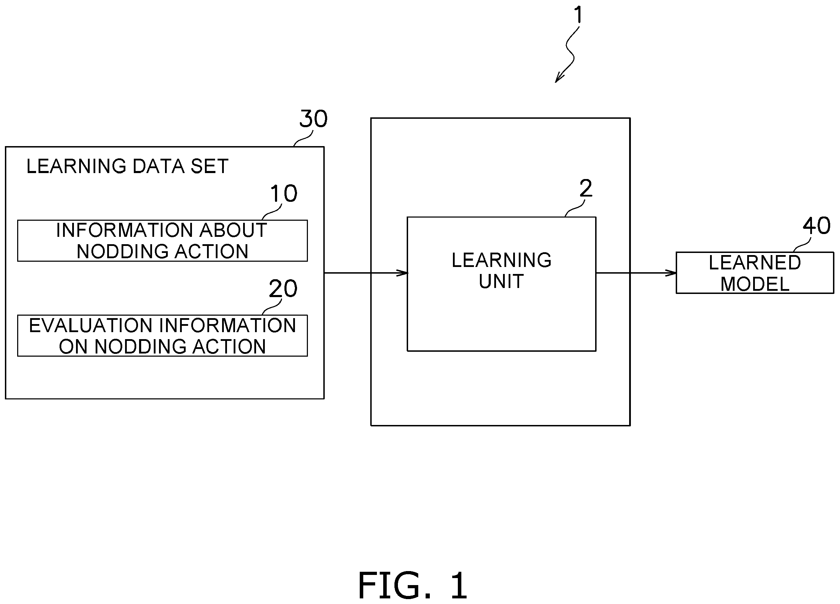

Fig. 1 illustrates the learning apparatus 1 according to the present embodiment. The learning apparatus 1 is implemented by a computer. The learning apparatus 1 includes a learning unit 2.

The learning unit 2 executes learning by using the information 10 about the nodding action and evaluation information 20 on the nodding action as a learning data set 30. According to the present embodiment, the information 10 about the nodding action is the number of nodding actions (nodding amount). The evaluation information 20 on the nodding action is an evaluation of the target causing the nodding action. The target causing the nodding action is an utterance during the meeting. It is assumed that the utterance during the meeting relates to an idea generated during the meeting.

During the learning process, the seat surface sensor is used to acquire the information 10 about the nodding action. A manual questionnaire is used to acquire the evaluation information 20 on the nodding action.

The learned model 40 is obtained by learning the information 10 about the nodding action and the evaluation information 20 on the nodding action by the learning data set 30.

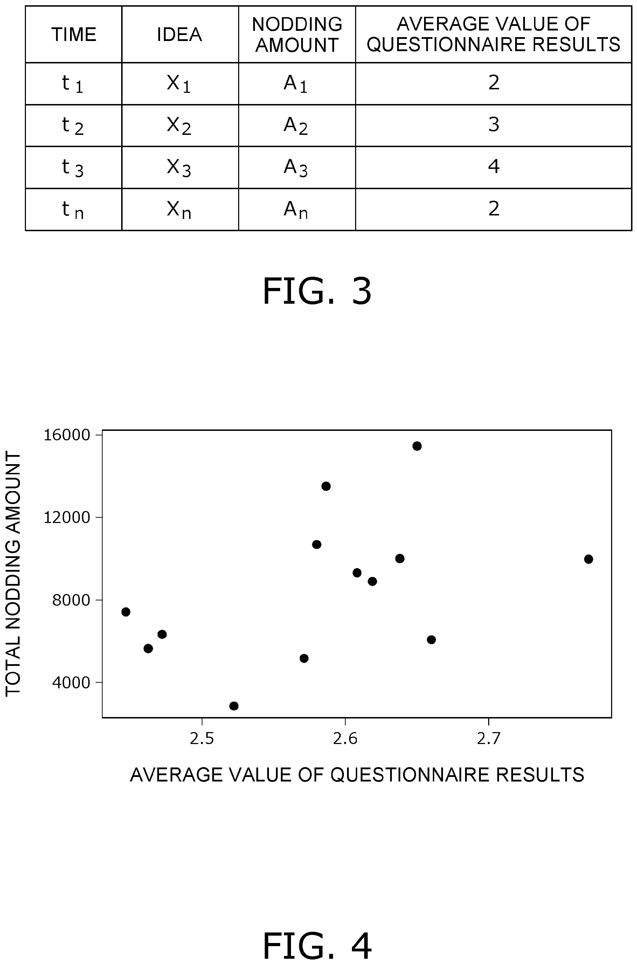

Fig. 3 illustrates an example of learning data. In this example, the number of nodding actions (nodding amount) of the participants in the meeting when an idea is generated during the meeting is the information about the nodding action. The average value of questionnaire results regarding the idea generated during the meeting is the evaluation information on the nodding action. The questionnaire is conducted on the participants of the meeting by evaluating the idea on five levels.

As illustrated in Fig. 3, learning is executed by using a teaching data set in which a nodding amount $A_1$ for an idea $X_1$ generated at a time $t_1$ during a meeting is input and an average value "2" of questionnaire results is output. Furthermore, learning is executed by using a teaching data set in which a nodding amount $A_2$ for an idea $X_2$ generated at a time $t_2$ during the meeting is input and the average value "3" of questionnaire results is output. Further, learning is executed by using a teaching data set in which a nodding amount $A_3$ for an idea $X_3$ generated at a time $t_3$ during the meeting is input and the average value "4" of the questionnaire results is output. Further, learning is executed by using a teaching data set in which a nodding amount An for an idea Xn generated at a time $t_n$ during the meeting is input and the average value "2" of the questionnaire results is output.

Fig. 4 illustrates an example of a scatter diagram generated with the vertical axis for the total nodding amount obtained by adding up the frames in which all the participants are nodding and the horizontal axis for the average value of the questionnaire results.

According to the present embodiment, 13 groups of 6 participants are participating in the meeting. The total nodding amount for each group is calculated by simply adding up all the frames in which the participants are nodding in each group. Further, a questionnaire is conducted as to whether the idea is impressive. The questionnaire is evaluated on five levels.

As illustrated in Fig. 4, there is a positive correlation between the average value of the questionnaire results and the total nodding amount. Correlation analysis using Spearman's rank correlation coefficient (Spearman's rank correlation coefficient) on the average value of the questionnaire results and the total nodding amount results in $p > .05$. The absolute value of the correlation coefficient is 0.49, and a correlation is observed. The correlation between the average value of the questionnaire results and the total nodding amount indicates that there is not only an instantaneous relationship between the quality of the idea and the nodding, but also a medium to long-term relationship.

(4) Overall Operation of Evaluation Information Output Apparatus

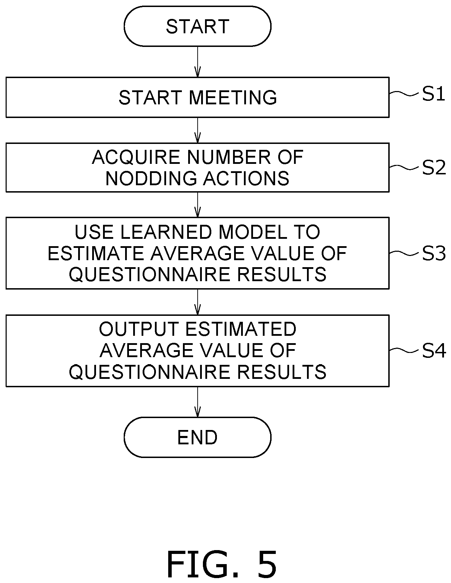

Fig. 5 illustrates a flowchart of the evaluation information output apparatus 100. In the case described according to the present embodiment, the evaluation information output apparatus 100 is used during a meeting.

First, a meeting is started in Step S1. The participants of the meeting are captured by a camera. Further, the participant of the meeting sits on a chair in which a pressure sensor is installed. The first information acquisition unit 101 acquires the number of nodding actions (nodding amount) of the participants in the meeting (Step S2). The output unit 102 uses the learned model 40 to estimate the average value of the questionnaire results from the number of nodding actions of the participants in the meeting (Step S3). Subsequently, the output unit 102 outputs the average value of the questionnaire results estimated in Step S3 to a display (not illustrated) (Step S4). The display presents the estimated average value of the questionnaire results.

(5) Feature

(5-1)
The learning apparatus 1 according to the present embodiment is the learning apparatus 1 that learns nodding actions of one or more persons and includes the learning unit 2. The learning unit 2 generates the learned model 40 that receives the information about the nodding action as input and outputs the evaluation information on the nodding action. The learning unit 2 learns the information 10 about the nodding action and the evaluation information 21 on the nodding action as the learning data set 40 to generate the learned model 30.

The learning apparatus 1 learns the information 10 about the nodding action, which is a reaction of the participant in the meeting, or the like, and the evaluation information 20 on the nodding action as the learning data set 30 and thus may generate the learned model 40 capable of qualitatively evaluating a group activity such as a meeting.

(5-2)

The evaluation information output apparatus 100 according to the present embodiment is the evaluation information output apparatus 100 that, based on the nodding action of one or more persons, outputs the evaluation information about the nodding action and includes the first information acquisition unit 101 and the output unit 102. The first information acquisition unit 101 acquires the information 11 about the nodding action. The output unit 102 includes the learned model 40 that receives the information 11 about the nodding action as input and outputs the evaluation information 21 on the nodding action. The output unit 102 uses the learned model 40 to estimate and output the evaluation information 21 on the nodding action from the information 11 about the nodding action. The learned model 40 is obtained by learning the information 10 about the nodding action and the evaluation information 20 on the nodding action as the learning data set 30.

In the evaluation information output apparatus 100, the learned model 30 is used to estimate the evaluation information on the nodding action from the information 11 about the nodding action, which is a reaction of the participant in the meeting, or the like, and thus it is possible to perform the qualitative evaluation of a group activity, such as a meeting.

The output unit 102 of the evaluation information output apparatus 100 may present the intellectual productivity score of the meeting as the evaluation information on the nodding action based on the repetition of the nodding action along the elapsed time of the meeting. The evaluation information output apparatus 100 evaluates the intellectual productivity of the meeting based on the nodding action of the participant and the timing thereof.

Further, the agreeableness of the participants may be evaluated based on the timing of nodding of the participant and the length of nodding. By evaluating the nodding after the utterance, the degree of contribution of the utterance in the meeting may be evaluated.

(5-3)

In the evaluation information output apparatus 100 according to the present embodiment, the evaluation information 21 on the nodding action is an evaluation of the target causing the nodding action. The evaluation of the target causing the nodding action is a result of a manual questionnaire conducted on a person.

In the evaluation information output apparatus 100, the evaluation of the target causing the nodding action is obtained by the questionnaire so that the quality of the nodding action may be determined.

(5-4)

In the evaluation information output apparatus 100 according to the present embodiment, the information 11 about the nodding action includes the number of nodding actions.

The evaluation information output apparatus 100 counts the number of nodding actions and calculates the nodding amount and thus may obtain the information about the reactions of the participants in the meeting, or the like.

(5-5)

In the evaluation information output apparatus 100 according to the present embodiment, the first information acquisition unit 101 uses the seat surface sensor to recognize the nodding action and acquire the information 11 about the obtained nodding action.

In the evaluation information output apparatus 100, the use of the seat surface sensor makes it possible to easily count the number 11 of nodding actions, which are gestures during the meeting.


(6) Modification


(6-1) Modification 1A


In the case described, the evaluation information output apparatus 100 according to the present embodiment includes the first information acquisition unit 101 and the output unit 102, but may further include a second information acquisition unit.

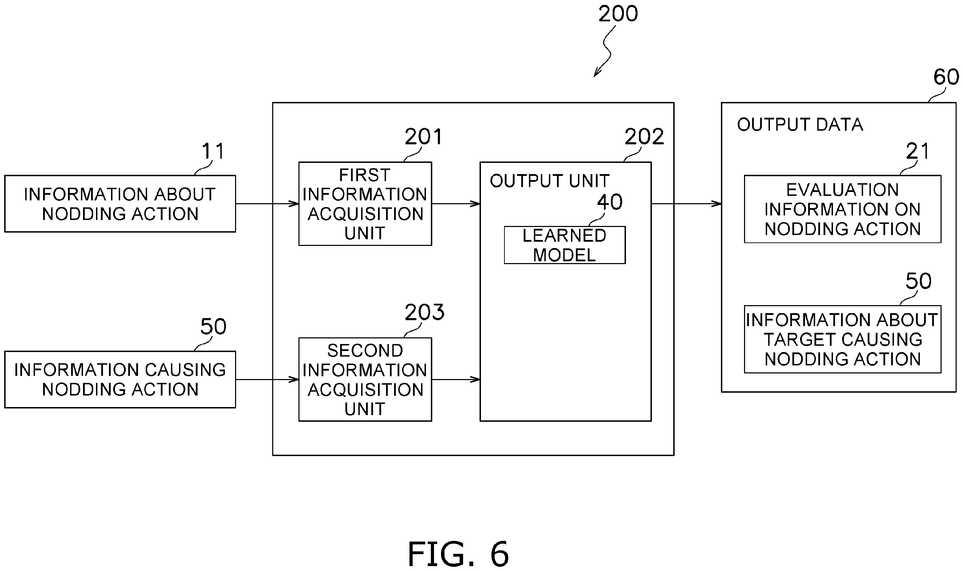

Fig. 6 illustrates an evaluation information output apparatus 200 according to a modification 1A. The evaluation information output apparatus 200 is implemented by a computer. The evaluation information output apparatus 200 includes a first information acquisition unit 201, a second information acquisition unit 203, and an output unit 202. The first information acquisition unit 201 acquires the information 11 about the nodding action. The second information acquisition unit 203 acquires information 50 about the target causing the nodding action.

The information 50 about the target causing the nodding action is an utterance during the meeting. In the evaluation information output apparatus 200 according to the modification A, the second information acquisition unit 203 captures a moving image using a camera (not illustrated) and acquires an idea that is an utterance during the meeting from the moving image.

The output unit 202 outputs, as output data 60, the data in which the information 50 about the target causing the nodding action is associated with the evaluation information 21 on the nodding action. Furthermore, the output unit 202 may output the evaluation data in which the meeting minutes information developed in time series is combined with the intellectual productivity score that is the evaluation information 21 on the nodding action.

The evaluation information output apparatus 200 outputs the information 50 about the target causing the nodding action and the evaluation information 21 on the nodding action in association with each other, and thus the evaluation information on the nodding action caused by the specific target may be obtained.

(6-2) Modification 1B

In the described case of the evaluation information output apparatus 100 according to the present embodiment, the information 11 about the nodding action is the number of nodding actions, but may be the period or amplitude of the nodding action.

The first information acquisition unit 101 may acquire the information about nodding including the timing in which the nodding action was performed. By acquiring the timing in which the nodding action was performed, the number of participants who nodded during the meeting may be determined. The larger the number of persons who nodded, the higher the possibility that an idea was created before the nodding action. There are more nodding actions when an idea arises than when there is no conversation.

Further, the information 11 about the nodding action may be the timing of the nodding action, such as whether the participant nodded immediately after an utterance during the meeting or nodded later, the strength of the nodding action, the presence or absence of persons nodding at the same time, the number of such persons, and the like.

Further, the characteristics of nodding may be determined by using the time from when the idea arises until when the nodding action occurs, the length (frequency) of the nodding action, the number of nodding actions (repetition per unit time), and the like. As a moving image is captured, the time difference from the utterance timing is extracted so that the time from when the idea arises until when nodding occurs is converted into a numerical value. Moreover, the frequency included in the image is extracted so that the frequency of the nodding action is converted into a numerical value.

Thus, determining the characteristics of nodding makes it possible to determine the degree of concentration of the participants during the meeting and the degree of heatedness of the meeting.

(6-3) Modification 1C

In the described case of the evaluation information output apparatus 100 according to the present embodiment, the number of nodding actions, which is the information 11 about the nodding action, is the total nodding amount for each group of participants of the meeting, but is not limited thereto. The number of nodding actions of each individual participant of the meeting may be used as the information 11 about the nodding action.

(6-4) Modification 1D

In the described case of the evaluation information output apparatus 100 according to the present embodiment, the evaluation information 21 on the nodding actions is results of the manual questionnaire conducted on persons, and the questionnaire is conducted as to whether the idea generated during the meeting is impressive, but is not limited thereto. A questionnaire may be conducted as to whether the idea generated during the meeting is original, agreeable, or socially accepted.

(6-5) Modification 1E

In the described case of the evaluation information output apparatus 100 according to the present embodiment, the target causing the nodding action is the idea that is an utterance during the meeting, but is not limited thereto. The target causing the nodding action may include at least one of data or an object presented during the presentation and a performance of a person or an animal.

(6-6) Modification 1F

In the described case of the evaluation information output apparatus 100 according to the present embodiment, the evaluation information 21 on the nodding action is the evaluation related to the target causing the nodding action, but may be information about emotions of persons. The information about the emotions of persons includes delight, anger, sorrow, and pleasure of persons or the information as to whether there is an agreement to the target causing the nodding action. The evaluation information on the nodding action is acquirable by analyzing image data on the face of the person or analyzing audio data.

Thus, the intention of the nodding action of the person is estimated from the information 11 on the nodding action so that the quality of nodding may be determined.

(6-7) Modification 1G

In the described case of the evaluation information output apparatus 100 according to the present embodiment, the first information acquisition unit 101 acquires the information about the nodding action from the seat surface sensor, but is not limited thereto. Motion capture, an acceleration sensor, a depth camera, or a moving image of a person may be used to recognize the nodding action and acquire the information about the obtained nodding action.

Motion capture may use a motion capture device, such as OptiTrack, to estimate the head movement. Furthermore, examples of the acceleration sensor may include JIN Meme. An acceleration sensor may be used to capture the head movement. Further, a depth camera or a Kinect sensor may be used to count the number of nodding actions. Furthermore, the nodding action may be detected from the movement of the head based on the moving image of the participant during the meeting.

(6-8) Modification 1H

Although the embodiment of the present disclosure has been described above, it is understood that various modifications may be made to forms and details without departing from the spirit and scope of the present disclosure described in the scope of claims.

Reference Signs List

1 Learning apparatus
2 Learning unit
100, 200 Evaluation information output apparatus
101, 201 First information acquisition unit
203 Second information acquisition unit
102, 202 Output unit
10, 11 Information about nodding action
20, 21 Evaluation information on nodding action
30 Learning data set
40 Learned model
50 Information about target causing nodding action

Citation List

Patent Literature

PTL 1: Japanese Unexamined Patent Application Publication No. 2019-211962

**Claims**

1. A learning apparatus (1) that learns a nodding action of one or more persons, the learning apparatus comprising a learning unit (2) that generates a learned model (40) that receives information (10) about the nodding action as input and outputs evaluation information (20) on the nodding action, wherein the learning unit learns the information about the nodding action and the evaluation information on the nodding action as a learning data set (30) to generate the learned model.

2. An evaluation information output apparatus (100, 200) that, based on a nodding action of one or more persons, outputs evaluation information about the nodding action, the evaluation information output apparatus comprising:

   a first information acquisition unit (101, 201) that acquires information (11) about the nodding action; and

an output unit (102, 202) that includes a learned model that receives information about the nodding action as input and outputs evaluation information on the nodding action and uses the learned model to estimate and output evaluation information (21) on the nodding action from the information about the nodding action, wherein the learned model is obtained by learning the information about the nodding action and the evaluation information on the nodding action as a learning data set.

3. The evaluation information output apparatus according to claim 2, further comprising a second information acquisition unit (203) that acquires information (50) about a target causing the nodding action, wherein

the target causing the nodding action includes at least one of an utterance during a meeting, data or an object presented during a presentation, and a performance of a person or an animal, and
the output unit outputs information about the target causing the nodding action and the evaluation information on the nodding action in association with each other.

4. The evaluation information output apparatus according to claim 2 or 3, wherein

the evaluation information on the nodding action is information about emotions of the person,
the information about the emotions of the person includes information about delight, anger, sorrow, and pleasure of the person or information as to whether the person is agreeable to the target causing the nodding action, and
the evaluation information on the nodding action is acquirable by analyzing image data on a face of the person or analyzing audio data.

5. The evaluation information output apparatus according to claim 2 or 3, wherein

the evaluation information on the nodding action is an evaluation of the target causing the nodding action, and
the evaluation of the target causing the nodding action is a result of a manual questionnaire conducted on the person.

6. The evaluation information output apparatus according to any one of claims 2 to 5, wherein the information about the nodding action includes at least one of a number, a period, and an amplitude of the nodding action.

7. The evaluation information output apparatus according to any one of claims 2 to 5, wherein the information about the nodding action includes at least one of a timing of the nodding action, a strength of the nodding action, presence or absence of, among a plurality of the persons, the persons having an identical timing of the nodding action, and a number of persons having an identical timing of the nodding action.

8. The evaluation information output apparatus according to claim 3, wherein the information about the nodding action includes a time until the nodding action occurs after an utterance during the meeting.

9. The evaluation information output apparatus according to any one of claims 2 to 5, wherein the information about the nodding action includes at least one of a frequency of the nodding action and repetition of the nodding action per unit time.

10. The evaluation information output apparatus according to any one of claims 2 to 9, wherein the first information acquisition unit uses a seat surface sensor, motion capture, an acceleration sensor, a depth camera, or a moving image of the person to recognize the nodding action and acquire the information about the obtained nodding action.

FIG. 1

FIG. 2

| TIME | IDEA | NODDING AMOUNT | AVERAGE VALUE OF QUESTIONNAIRE RESULTS |
|------|------|----------------|----------------------------------------|
| $t_1$ | $X_1$ | $A_1$ | 2 |
| $t_2$ | $X_2$ | $A_2$ | 3 |
| $t_3$ | $X_3$ | $A_3$ | 4 |
| $t_n$ | $X_n$ | $A_n$ | 2 |

# FIG. 3

FIG. 4

```
┌─────────────┐
│    START    │
└─────────────┘
       │
       ▼
┌──────────────────────────┐
│     START MEETING        │ ~S1
└──────────────────────────┘
       │
       ▼
┌──────────────────────────┐
│    ACQUIRE NUMBER OF      │ ~S2
│    NODDING ACTIONS        │
└──────────────────────────┘
       │
       ▼
┌──────────────────────────┐
│   USE LEARNED MODEL TO    │
│ ESTIMATE AVERAGE VALUE OF │ ~S3
│  QUESTIONNAIRE RESULTS    │
└──────────────────────────┘
       │
       ▼
┌──────────────────────────┐
│   OUTPUT ESTIMATED        │
│   AVERAGE VALUE OF        │ ~S4
│  QUESTIONNAIRE RESULTS    │
└──────────────────────────┘
       │
       ▼
┌─────────────┐
│     END     │
└─────────────┘
```

# FIG. 5

FIG. 6

EP 4 290 429 A1

<div align="center">

**INTERNATIONAL SEARCH REPORT**

</div>

| | International application No. |
|---|---|
| | **PCT/JP2022/004684** |

**A. CLASSIFICATION OF SUBJECT MATTER**

*G06N 20/00*(2019.01)i; *G06Q 10/06*(2012.01)i; *G06Q 10/10*(2012.01)i
FI: G06N20/00 130; G06N20/00; G06Q10/06 332; G06Q10/10 320

According to International Patent Classification (IPC) or to both national classification and IPC

**B. FIELDS SEARCHED**

Minimum documentation searched (classification system followed by classification symbols)

G06Q10/06; G06Q10/10; G06N20/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | 井上 昂治, 潜在キャラクタモデルによる聞き手のふるまいに基づく対話エンゲージメントの推定, 人工知能学会論文誌　2018年33巻1号, 05 January 2018, [retrieval date: 13 April 2022], internet <URL:https://www.jstage.jst.go.jp/article/tjsai/33/1/33_DSH-F/_pdf/-char/ja>　in particular, 1. to 4., (INOUE, Koji. Engagement Recognition from Listener's Behaviors in Spoken Dialogue Using a Latent Character Model. Transactions of the Japanese Society for Artificial Intelligence 2018 vol. 33, no. 1.) | 1-10 |
| Y | 山本 剛, マルチモーダルヘッドセットを用いたうなずき検出と会話の重要箇所把握, 情処処理学会研究壳告 vol. 2003 no. 94, 26 September 2003, pp. 13-19　in particular, 2. to 4., (YAMAMOTO, Goh. Nod detection and Retrieval of meaningful communications with a Multimodal headset. IPSJ SIG Technical Reports vol. 2003 no. 94.) | 1-10 |

☑ Further documents are listed in the continuation of Box C.　　☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 April 2022** | **26 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/004684**

### C. DOCUMENTS CONSIDERED TO BE RELEVANT

| Category* | Citation of document, with indication, where appropriate, of the relevant passages | Relevant to claim No. |
|---|---|---|
| Y | 西村 賢人, SenseChairによる意見発散課題におけるコミュニケーションとうなずきの関係性に関する検討, 電子情報通信学会技術研究報告 vol. 120 no. 136, 14 January 2021 (accession date), pp. 65-70 <br> in particular, 2. to 4., (NISHIMURA, Kento. A Study on the Relationship between Communication and Nodding in an Idea Generation Task by Sense Chair. IEICE Technical Report vol. 120 no. 136.) | 1-10 |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019211962 A